# EUROPÄISCHE PATENTSCHRIFT

(11) **EP 2 068 044 B1**
(45) Veröffentlichungstag und Bekanntmachung des Hinweises auf die Patenterteilung: **06.03.2013**
(21) Anmeldenummer: 08167214.9
(22) Anmeldetag: 22.10.2008
(51) Int. Cl.: F16H 61/30

(54) **Servounterstützungseinrichtung für Kraftfahrzeug-Wechselgetriebe**
Servo assistance device for motor vehicle variable-speed transmission
Système de servo-assistance pour une boîte de vitesses de véhicule automobile

(30) Priorität: 06.12.2007 DE 102007055721
(43) Veröffentlichungstag der Anmeldung: 10.06.2009
(73) Patentinhaber: ZF Friedrichshafen AG, 88038 Friedrichshafen (DE)
(72) Erfinder: Fischer, Dieter, 88149, Nonnenhorn (DE); Späth, Klaus, 88276, Berg (DE)

(56) Entgegenhaltungen:
- WO-A1-2005/119100
- DE-A1- 19 539 472
- DE-A1-102004 042 609
- DE-A1-102006 006 651
- DE-A1-102006 006 652

## Beschreibung

Die Erfindung betrifft eine Servounterstützungseinrichtung, insbesondere für eine Schaltvorrichtung eines Kraftfahrzeuggetriebes.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muss er in allen Tätigkeiten, die zum Führen eines Kraftfahrzeuges notwendig sind, so weit wie möglich entlastet und unterstützt werden.

Es sind pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungszylinder mit integriertem hydraulischem Dämpfer den pneumatischen Kraftteil. Eine direkte proportionale Abbildung der Handschaltkraft wird hier nicht erreicht. Die Wege zwischen Steuerteil und Kraftteil sind lang und der Anbau ist platzraubend. Beschädigungen der Druckluftleitungen zwischen Steuerteil und Kraftteil können nicht vermieden werden.

In der DE 195 39 472 A1 wird eine Schaltvorrichtung mit einer Servounterstützungseinrichtung für ein Getriebe eines Kraftfahrzeugs offenbart. Eine Steuerstange der Servounterstützungseinrichtung ist axial verschiebbar innerhalb einer Kolbenstange vorgesehen und wirkt über ein Schaltgestänge mit einem Schalthebel zusammen. An der Kolbenstange ist ein beidseitig mit einem Druckmittel beaufschlagbarer Kolben angeordnet, und die Kolbenstange wirkt mit Mitteln zum Schalten des Zahnräderwechselgetriebes zusammen. Bei einer Axialverstellung der Steuerstange in der Kolbenstange sind über Betätigungskolben Steuerventile betätigbar. Die über Schalthebel und Schaltgestänge auf die Steuerstange ausgeübte Schaltkraft wird über die Kolbenstange auf die Mittel zum Schalten des Zahnräderwechselgetriebes proportional übertragen. Dabei geben die beiden Seiten der Schalteinrichtung unterschiedlich große Schaltkräfte ab, so dass verschiedene Gangstufen des Fahrzeuggetriebes mit unterschiedlichen Schaltkräften geschaltet werden können. Die unterschiedlichen Schaltkräfte werden durch unterschiedliche Ventilkennlinien, bedingt durch unterschiedlich große Kolbenflächen der Betätigungskolben und/oder durch unterschiedliche geometrische Abmessungen der beiden entgegengesetzt angeordneten Oberflächen des Kolbens erzielt.

Aus der DE 10 2006 006 651 A1 ist eine Schaltvorrichtung mit einer Servounterstützungseinrichtung für ein Getriebe eines Fahrzeugs bekannt geworden, welche Mittel zum Schalten und Wählen einer Gangstufe eines Getriebes und eine Steuerstange der Servounterstützungseinrichtung umfasst, auf die eine zu unterstützende Handschaltkraft einwirkt. In der Schaltvorrichtung sind elastische Elemente vorgesehen, um die auf die Servounterstützungseinrichtung einwirkende Handschaltkraft vor der Einleitung in die Servounterstützungseinrichtung zu verändern oder zu begrenzen.

Die DE 10 2006 006 652 A1 offenbart ebenfalls eine Schaltvorrichtung mit einer Servounterstützungseinrichtung für ein Getriebe eines Fahrzeugs, welche Mittel zum Schalten und Wählen einer Gangstufe eines Getriebes und eine Steuerstange der Servounterstützungseinrichtung umfasst, auf die eine zu unterstützende Handschaltkraft einwirkt. In der Schaltvorrichtung sind Federelemente vorgesehen, um die auf die Servounterstützungseinrichtung einwirkende Handschaltkraft innerhalb der Servounterstützungseinrichtung vor und/oder während der Erzeugung der Servounterstützungskraft zu verändern.

Um unterschiedliche Servounterstützungskräfte zu realisieren, benötigt man unterschiedliche Nachgiebigkeiten oder Elastizitäten. Dies kann je nach konstruktiver Ausführung aufwendig sein und Bauraum benötigen, welcher oftmals nicht zur Verfügung steht.

In der DE 10 2004 042 609 A1 werden Kennlinien für eine Servounterstützungseinrichtung einer Schaltvorrichtung eines Kraftfahrzeuggetriebes vorgeschlagen. Die Kennlinien weisen abhängig von einer Handschaltkraft bzw. einer Schaltungsphase Bereiche mit unterschiedlicher Steigung bzw. Proportionalität zur Handschaltkraft auf. In der DE 10 2004 042 609 A1 wird nicht offenbart, wie die Kennlinien konstruktiv realisiert werden können.

Schließlich ist aus der WO 2005/119100 A1 die als nächstliegender Stand der Technik angesehen werden kann, ein System zur Begrenzung einer Schaltkraft. Die auf das Gangschaltsystem von einer Schaltunterstützungseinrichtung einwirkende Kraft soll dabei mit Hilfe einer Ventileinrichtung einen vorgegebenen Grenzwert nicht überschreiten.

Diese Schaltunterstützungseinrichtung umfasst eine Steuerstange, auf die eine zu unterstützende Handschaltkraft F_{H} einwirkt, eine Kolbenstange, welche mit Mitteln zum Schalten eines Zahnräderwechselgetriebes zusammenwirkt und ein Ventil, welches Ventilkolben und Ventilschieber aufweist und mit Stufenkolben und Federelemente zusammenwirkt.

Der vorliegenden Erfindung liegt die Aufgabe zugrunde, eine Servounterstützungseinrichtung, insbesondere für eine Schaltvorrichtung eines Kraftfahrzeuggetriebes, dahingehend weiter zu verbessern, dass eine von der Servounterstützungseinrichtung erzeugte Servounterstützungskraft besser an eine maximal zulässige Belastung von Synchronisierungen eines Getriebes anpassbar ist.

Die der Erfindung zugrunde liegende Aufgabe wird durch eine Servounterstützungseinrichtung gemäß Anspruch 1 und eine Schaltvorrichtung gemäß Anspruch 9 gelöst.

Besondere Ausführungsarten der Erfindung sind in den abhängigen Ansprüchen beschrieben.

In einer Ausführungsform der erfindungsgemäßen Servounterstützungseinrichtung Anschlag der Kolbenstange kann der beispielsweise durch einen Sicherungsring realisiert werden. Durch die Federelemente werden die Stufenkolben bei nicht betätigter Servounterstützungseinrichtung jeweils gegen den Dichtsitz der Kolbenstange gedrückt. Die Federelemente können beispielsweise als Spiralfeder oder Tellerfeder ausgebildet sein.

Die Federelemente sind vorgespannt in der Servounterstützungseinrichtung angeordnet. Je nach Auslegung der Federelemente kann die sprunghafte Reduzierung der Servounterstützungskraft bei einer bestimmten auf die Steuerstange der Servounterstützungseinrichtung einwirkenden Handschaltkraft bewirkt werden. Bei Federelementen mit kleiner Federkraft wird die sprunghafte Reduzierung der Servounterstützungskraft früher bewirkt als bei Federelementen mit größerer Federkraft.

In einer bevorzugten Ausführungsform der erfindungsgemäßen Servounterstützungseinrichtung weist die Kennlinie nach der sprunghaften Reduzierung der Servounterstützungskraft eine geringere Steigung und somit einen flacheren Verlauf auf, als vor der sprunghaften Reduzierung der Servounterstützungskraft.

Die erfindungsgemäße Schaltvorrichtung für ein Getriebe eines Kraftfahrzeugs, umfasst Mittel zum Wählen und Schalten einer Gangstufe des Getriebes und weist die erfindungsgemäße Servounterstützungseinrichtung auf.

Im Folgenden wird das Grundprinzip der Erfindung, welche mehrere Ausführungsformen zulässt, an Hand einer Zeichnung beispielhaft näher erläutert.
Es zeigen:
- Fig. 1: eine Schaltanlage nach dem Stand der Technik,
- Fig. 2: einen Ausschnitt einer Ausführungsform der erfindungsgemäßen Servounterstützungseinrichtung in Schnittdarstellung und
- Fig. 3: eine Kennlinie.

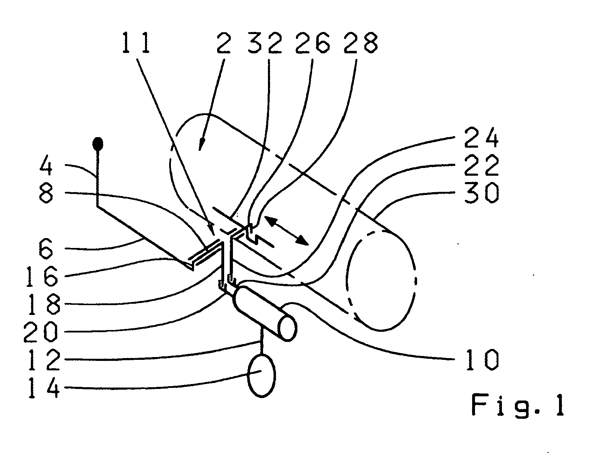

Die Fig. 1 zeigt in einer Skizze die Schaltanlage 2 eines Kraftfahrzeuges nach dem Stand der Technik. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatische Servounterstützungseinrichtung 10 weist eine Anschlussleitung 12 auf, die zu einem Vorratsbehälter 14 führt, aus dem die pneumatische Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so dass der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

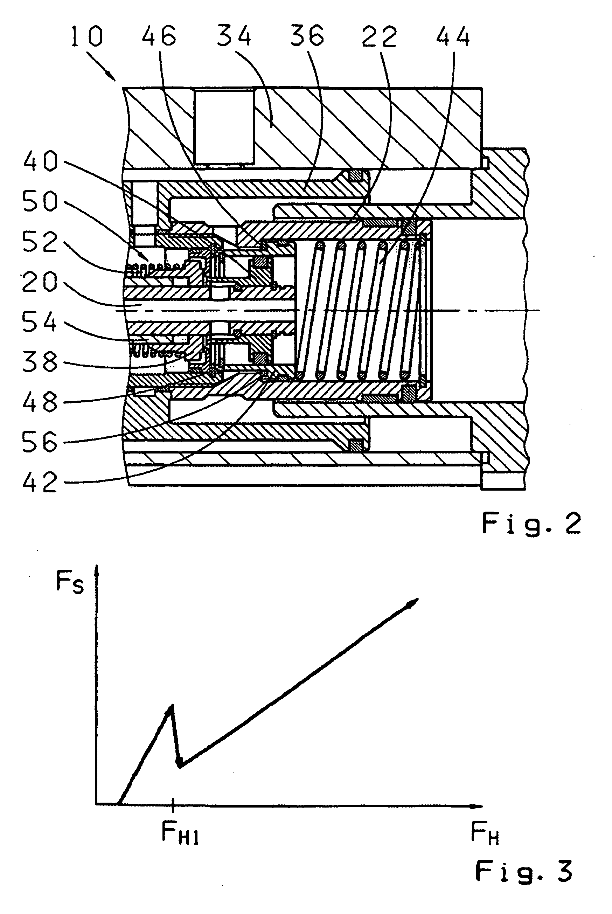

Die Fig. 2 zeigt einen Ausschnitt der erfindungsgemäßen Servounterstützungseinrichtung 10 in einer Schnittdarstellung. Die Servounterstützungseinrichtung 10 umfasst eine Steuerstange 20 und eine Kolbenstange 22 sowie einen Zylinder 34 und einen Kolben 36. Die Steuerstange 20 der Servounterstützungseinrichtung 10 ist axial verschiebbar innerhalb der Kolbenstange 22 angeordnet und wirkt über ein Schaltgestänge mit einem Schalthebel zusammen (siehe Fig. 1). Der Kolben 36 und die Kolbenstange 22 sind fest miteinander verbunden bzw. aus einem Bauteil gefertigt. Die Kolbenstange 22 wirkt mit Mitteln zum Schalten des Zahnräderwechselgetriebes zusammen (siehe Fig. 1). Ein Ventil 50 umfasst Ventilkolben 40 (hier ist nur einer dargestellt) und Ventilschieber 38, 54. Die Ventilkolben 40 sind hier fest auf der Steuerstange 20 angeordnet. Durch eine axiale Betätigung der Steuerstange 20 entlang ihrer Achse werden somit auch die Ventilkolben 40 betätigt. Zwischen den Ventilkolben 40 sind die Ventilschieber 38, 54 axial verschiebbar angeordnet. Die Ventilschieber 38, 54 werden durch ein Federelement 52 auseinander gehalten und liegen je an einem Ventilsitz der Kolbenstange 22 an. Erfindungsgemäß weist die Servounterstützungseinrichtung 10 Stufenkolben 42 und Federelemente 44 auf. In dem in der Fig. 2 dargestellten Ausschnitt der erfindungsgemäßen Servounterstützungseinrichtung 10 ist jeweils nur ein Stufenkolben 42, ein Federelement 44 und ein Ventilkolben 40 dargestellt und zwar für eine Betätigung der Steuerstange 20 in der Zeichenblattebene nach links. Die erfindungsgemäße Servounterstützungseinrichtung 10 weist analog für die Betätigung der Steuerstange 20 in der Zeichenblattebene nach rechts ebenfalls einen Stufenkolben, ein Federelement und einen Ventilkolben auf, welche die gleiche Funktion bewirken, wie der Stufenkolben 42, das Federelement 44 und der Ventilkolben 40 für die Betätigung der Steuerstange 20 in der Zeichenblattebene nach links.

Der Stufenkolben 42 ist hier in Form eines Hohlzylinders ausgebildet, welcher an der dem Federelement 44 gegenüberliegenden Seite einen in Richtung zur Steuerstange 20 hin ausgebildeten Anschlag aufweist, welcher hier durch einen Sicherungsring ausgebildet ist. Ebenso ist es denkbar, dass der Anschlag und der Stufenkolben 42 aus einem Bauteil gefertigt sind. Das Federelement 44 ist hier als Spiralfeder ausgebildet. Der Stufenkolben 42 ist derart angeordnet, dass er sowohl die Steuerstange 20 als auch den Ventilkolben 40 umgibt und in axialer Richtung zur Steuerstange 20 verschiebbar ist. Das Federelement 44 liegt mit seinem einen Ende an einem Anschlag der Kolbenstange 22 und mit seinem anderen Ende an dem Stufenkolben 42 an. In nicht betätigtem Zustand der Servounterstützungseinrichtung 10 liegen die Ventilschieber 38, 54 an den Ventilsitzen der Kolbenstange 22 an und der Stufenkolben 42 wird durch das Federelemente 44 gegen einen Anschlag 56 der Kolbenstange 22 gedrückt. Der Anschlag 56 ist hierbei als Dichtsitz ausgebildet.

Wird die Steuerstange 20 aufgrund einer Handschaltkraft in der Zeichenblattebene nach links bewegt, dann wird auch der fest auf der Steuerstange 20 angeordnete Ventilkolben 40 nach links bewegt. Durch den Ventilkolben 40 wird der Ventilschieber 38 betätigt, wodurch sich dieser vom Ventilsitz der Kolbenstange 22 löst und das Ventil 50 öffnet. Das geöffnete Ventil 50 regelt mittels eines vorhandenen Vorratdrucks einen Servodruck entsprechend zur vorherrschenden Handschaltkraft bzw. Steuerstangenkraft ein. Nach dem Öffnen des Ventils 50 werden sowohl der Ventilkolben 40 als auch eine Stufenkolbenfläche 48 mit Druck beaufschlagt. Die Stufenkolbenfläche 48 besteht hier aus der zum Ventil 50 hin weisenden Stirn-Fläche des Stufenkolbens 42 und dem zur Steuerstange 20 hin ausgebildeten Anschlag. Die durch den Servodruck auf den Stufenkolben 42 wirkende Druckkraft ist zunächst noch kleiner als die von dem Federelement 44 erzeugte Kraft, wodurch der Stufenkolben 42 weiterhin am Dichtsitz 56 der Kolbenstange 22 anliegt und das Federelement 44 nicht komprimiert wird. Der Handschaltkraft bzw. Steuerstangenkraft wirkt somit lediglich die auf den Ventilkolben 40 wirkende Druckkraft entgegen, was einer Regelstellung im Bereich der steilen Kennlinie entspricht.

Wird die durch den geregelten Servodruck auf den Stufenkolben 42 wirkende Druckkraft größer als die Federkraft des Federelements 44, dann hebt sich der Stufenkolben 42 vom Dichtsitz 56 ab. Der bisher auf die Stufenkolbenfläche 48 wirkende Servodruck wirkt nun auch auf die Stufenkolbenfläche 46, wodurch die auf den Stufenkolben 42 wirkende Druckkraft entsprechend vergrößert und das Federelement 44 komprimiert wird. Dies bewirkt, dass der Stufenkolben 42 mit seinem zur Steuerstange 20 hin ausgebildeten Anschlag axial an dem Ventilkolben 40 zur Anlage kommt und das Ventil 50 der Servounterstützungseinrichtung 10 kurz schließt, da die bisher auf die Steuerstange 20 eingeleitete Handschaltkraft mit der nun auf den Stufenkolben 42 wirkenden vergrößerten Druckkraft nicht mehr im Gleichgewicht steht. Das Ventil 50 regelt sich dadurch schlagartig auf einen niedrigeren Servodruck ein, wodurch eine sprunghafte Reduzierung der Servounterstützungskraft erfolgt.

Der Handschaltkraft bzw. Steuerstangenkraft wirkt dann sowohl die auf den Ventilkolben 40 direkt wirkende Druckkraft entgegen, als auch die auf die Stufenkolbenflächen 46, 48 wirkende Druckkraft, welche über den zur Steuerstange 20 hin ausgebildeten Anschlag auf den Ventilkolben 40 übertragen wird. Somit wird ab einer bestimmten Handschaltkraft die der Handschaltkraft bzw. Steuerstangenkraft entgegenwirkende Druckkraft entsprechend vergrößert, da die Fläche des Stufenkolbens 42, auf die der Servodruck wirkt um die Stufenkolbenfläche 46 vergrößert ist. Bei weiterer Steigerung der Handschaltkraft führt dies zu einem geringeren Anstieg der Servounterstützungskraft, wodurch die Kennlinie nach der sprunghaften Reduzierung der Servounterstützungskraft eine kleinere Steigung aufweist und somit flacher verläuft.

Analoges gilt für eine Betätigung der Steuerstange 20 in der Zeichenblattebene nach rechts.

In der Fig. 3 wird die Servounterstützungskraft F_{S} als Funktion der Handschaltkraft F_{H} dargestellt. Die durch die erfindungsgemäße Servounterstützungseinrichtung 10 realisierbare Ventilkennlinie weist eine sprunghafte Reduzierung der Servounterstützungskraft F_{S} auf, ab welcher der Verlauf der Kennlinie weniger steil ist, um die an einer Schaltung beteiligten Bauteile zu schonen.

Ist die Handschaltkraft F_{H} kleiner als F_{H1}, dann reicht der eingeregelte Servodruck nicht aus, um den Stufenkolben 42 gegen die Kraft des Federelements 44 zu bewegen. Somit wirkt ausschließlich die durch den Servodruck auf den Ventilkolben 40 wirkende Druckkraft als Reaktionskraft der Handschaltkraft F_{H} entgegen. Diese Regelstellung entspricht dem Bereich der steilen Kennlinie. Bis zur Handschaltkraft F_{H1} weist die Kennlinie hier einen linear ansteigenden Verlauf auf.

Wird nun die durch den geregelten Servodruck auf den Stufenkolben 42 wirkende Druckkraft größer als die Federkraft des Federelements 44, dann hebt sich der Stufenkolben 42 vom Dichtsitz 56 ab. Dies bewirkt, dass das Ventil 50 der Servounterstützungseinrichtung 10 kurz schließt, da die bisher auf die Steuerstange 20 eingeleitete Handschaltkraft F_{H} mit der nun auf den Stufenkolben 42 wirkenden vergrößerten Druckkraft nicht mehr im Gleichgewicht steht. Das Ventil 50 regelt sich dadurch auf einen kleineren Servodruck ein, wodurch eine sprunghafte Reduzierung der Servounterstützungskraft F_{S} erzielt wird.

Ab einer bestimmten Handschaltkraft F_{H1} wird somit die der Handschaltkraft bzw. Steuerstangenkraft entgegenwirkende Druckkraft entsprechend vergrößert, da die Fläche des Stufenkolbens 42, auf die der Servodruck wirkt vergrößert ist. Bei weiterer Steigerung der Handschaltkraft F_{H} führt dies zu einem geringeren Anstieg der Servounterstützungskraft F_{S}, wodurch die Kennlinie nach der sprunghaften Reduzierung der Servounterstützungskraft F_{S} eine kleinere Steigung aufweist und somit flacher verläuft. Hier weist die Kennlinie in diesem Bereich einen linear ansteigenden Verlauf auf.

Durch die erfindungsgemäße Servounterstützungseinrichtung kann zu Beginn einer Schaltung eine ausreichende Servounterstützungskraft F_{S} gewährleistet werden, wobei während einer Synchronphase eine Servounterstützungskraft F_{S} erzeugt wird, welche die an der Schaltung beteiligten Bauteile bzw. die Synchronisierungen nicht überlastet.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlussleitung
- 14: Vorratsbehälter
- 16: Hebel
- 18: Hebel
- 20: Steuerstange
- 22: Kolbenstange
- 24: Hebel
- 26: Schaltwelle
- 28: Hebel
- 30: Fahrzeuggetriebe
- 32: Schaltschiene
- 34: Zylinder
- 36: Kolben
- 38: Ventilschieber
- 40: Ventilkolben
- 42: Stufenkolben
- 44: Federelement
- 46: Stufenkolbenfläche
- 48: Stufenkolbenfläche
- 50: Ventil
- 52: Federelement
- 54: Ventilschieber
- 56: Dichtsitz
- F_{S}: Servounterstützungskraft
- F_{H}: Handschaltkraft

## Patentansprüche

1. Servounterstützungseinrichtung (10), insbesondere für eine Schaltvorrichtung eines Kraftfahrzeuggetriebes, welche Mittel (42, 44) umfasst, auf die ein Servodruck wirkt und mit welcher eine Kennlinie einer Servounterstützungskraft Fₛ darstellbar ist, welche in Abhängigkeit von einer Handschaltkraft F_{H} bzw. einer Schaltungsphase Bereiche mit unterschiedlicher Steigung bzw. Proportionalität zur Handschaltkraft F_{H} aufweist,
wobei die Mittel (42, 44) derart ausgebildet und in der Servounterstützungseinrichtung (10) angeordnet sind, dass eine sprunghafte Reduzierung der Servounterstützungskraft Fₛ realisierbar ist,
wobei die Servounterstützungseinrichtung (10) eine Steuerstange (20), auf die eine zu unterstützende Handschaltkraft F_{H} einwirkt, eine Kolbenstange (22), welche mit Mitteln zum Schalten eines Zahnräderwechselgetriebes zusammenwirkt und ein Ventil (50) umfasst, welches Ventilkolben (40) und Ventilschieber (38, 54) aufweist,
wobei die Mittel (42, 44) als mit dem Ventil (50) zusammenwirkende Stufenkolben (42) und Federelemente (44) ausgebildet sind,
wobei die Stufenkolben (42) in Form eines Hohlzylinders ausgebildet sind, der in Richtung zum Federelement (44) hin an seinem äußeren Umfang eine stufenförmige Vergrößerung seines Außendurchmessers und an der dem Federelement (44) gegenüberliegenden Seite einen in Richtung zur Steuerstange (20) hin ausgebildeten Anschlag aufweist,
wobei die Stufenkolben (42) innerhalb der Kolbenstange (22) angeordnet sind, die Steuerstange (20) und die Ventilkolben (40) umgeben und jeweils an einem Anschlag (56) der Kolbenstange (22) anliegen, wobei der Anschlag (56) jeweils als Dichtsitz ausgebildet ist und
wobei die Federelemente (44) jeweils einerseits an einem Anschlag der Kolbenstange (22) und andererseits an dem entsprechenden Stufenkolben (42) anliegen.

2. Servounterstützungseinrichtung (10) nach Anspruch 1, **dadurch gekennzeichnet, dass** die Federelemente (44) als Spiralfeder oder Tellerfeder ausgebildet sind.

3. Servounterstützungseinrichtung (10) nach einem der vorangegangenen Ansprüche, **dadurch gekennzeichnet, dass** je nach Auslegung der Federelemente (44) die sprunghafte Reduzierung der Servounterstützungskraft Fₛ bei einer bestimmten auf die Steuerstange (20) einwirkenden Handschaltkraft F_{H1} bewirkt werden kann.

4. Servounterstützungseinrichtung (10) nach einem der vorangegangenen Ansprüche, **dadurch gekennzeichnet, dass** die Kennlinie der Servounterstützungskraft Fₛ nach der sprunghaften Reduzierung der Servounterstützungskraft Fₛ eine geringere Steigung und somit einen flacheren Verlauf aufweist.

5. Schaltvorrichtung (11) für ein Getriebe (30) eines Kraftfahrzeugs, welche Mittel zum Wählen und Schalten einer Gangstufe des Getriebes (30) umfasst, **gekennzeichnet durch** eine Servounterstützungseinrichtung (10) nach wenigstens einem der vorangegangenen Ansprüche.

## Claims

1. Servo assistance device (10), in particular for a shift device of a motor vehicle transmission, which comprises means (42, 44) on which a servo pressure acts and with which a characteristic curve of a servo assistance force F_{S} can be represented, which has, as a function of a manual shift force F_{H} or a shifting phase, regions with a different gradient or proportionality to manual shift force F_{H},
wherein the means (42, 44) are formed and arranged in the servo assistance device (10) in such a manner that a sudden reduction in servo assistance force F_{S} can be produced,
wherein the servo assistance device (10) has a control rod (20), on which a manual shift force F_{H} to be supported acts, and a piston rod (22), which interacts with means for shifting a gear wheel variable-speed transmission, and comprises a valve (50), which has a valve piston (40) and a valve slide (38, 54),
wherein the means (42, 44) are formed as differential pistons (42) and spring elements (44) which interact with the valve (50),
wherein the differential pistons (42) are formed in the shape of a hollow cylinder which has, in the direction towards the spring element (44) on its outer circumference, a stepped enlargement of its outer diameter and, on the side opposite the spring element (44), a stop formed in the direction of the control rod (20),
wherein the differential pistons (42) are arranged within the piston rod (22), surround the control rod (20) and the valve pistons (40) and in each case abut against a stop (56) of the piston rod (22), wherein the stop (56) is formed in each case as a sealing seat and
wherein the spring elements (44) in each case on the one hand abut against a stop of the piston rod (22) and on the other hand against the corresponding differential piston (42).

2. Servo assistance device (10) according to Claim 1, **characterized in that** the spring elements (44) are formed as spiral springs or disc springs.

3. Servo assistance device (10) according to one of the preceding claims, **characterized in that**, depending on the design of the spring elements (44), the sudden reduction in servo assistance force F_{S} can be brought about in the case of a specific manual shift force F_{H1} acting on the control rod (20).

4. Servo assistance device (10) according to one of the preceding claims, **characterized in that** the characteristic curve of servo assistance force F_{S} has, after the sudden reduction in the servo assistance force F_{S}, a lower gradient and thus a flatter profile.

5. Shift device (11) for a transmission (30) of a motor vehicle, which comprises means for selecting and shifting a gear stage of the transmission (30), **characterized by** a servo assistance device (10) according to at least one of the preceding claims.

## Revendications

1. Système de servo-assistance (10), en particulier pour un dispositif de changement de vitesse d'une boîte de vitesses de véhicule automobile, comprenant des moyens (42, 44) sur lesquels agit une servopression et à l'aide desquels peut être représentée une courbe caractéristique d'une force de servo-assistance F_{S} qui comprend, en fonction d'une force de changement de vitesse manuelle F_{H} ou d'une phase de changement de vitesse, des zones de pente ou de proportionnalité différente par rapport à la force de changement de vitesse manuelle F_{H},
dans lequel les moyens (42, 44) sont réalisés et disposés dans le système de servo-assistance (10) de telle sorte qu'une réduction abrupte de la force de servo-assistance F_{S} puisse être réalisée, dans lequel le système de servo-assistance (10) comporte une tige de commande (20) sur laquelle agit une force de changement de vitesse manuelle F_{H} devant être assistée, une tige de piston (22) qui coopère avec des moyens de changement de vitesse d'une boîte de vitesses à engrenages et une soupape (50) qui comprend un piston de soupape (40) et un tiroir de soupape (38, 54),
dans lequel les moyens (42, 44) sont réalisés sous forme de pistons étagés (42) et d'éléments ressort (44) qui coopèrent avec la soupape (50),
dans lequel les pistons étagés (42) sont réalisés sous la forme d'un cylindre creux qui comprend en direction de l'élément ressort (44), sur sa périphérie extérieure, un agrandissement étagé de son diamètre extérieur et, sur le côté opposé à l'élément ressort (44), une butée réalisée en direction de la tige de commande (20),
dans lequel les pistons étagés (42) sont disposés à l'intérieur de la tige de piston (22), entourent la tige de commande (20) et le piston de soupape (40) et s'appliquent respectivement contre une butée (56) de la tige de piston (22), dans lequel la butée (56) est réalisée respectivement en tant que siège d'étanchéité et
dans lequel les éléments ressort (44) s'appliquent respectivement d'une part contre une butée de la tige de piston (22) et d'autre part contre le piston étagé correspondant (42).

2. Système de servo-assistance (10) selon la revendication 1, **caractérisé en ce que** les éléments ressort (44) sont réalisés sous forme de ressort spiral ou de ressort Belleville.

3. Système de servo-assistance (10) selon l'une quelconque des revendications précédentes, **caractérisé en ce qu'**en fonction de la configuration des éléments ressort (44), la réduction abrupte de la force de servo-assistance F_{S} peut être provoquée lorsqu'une force de changement de vitesse manuelle F_{H1} déterminée agit sur la tige de commande (20).

4. Système de servo-assistance (10) selon l'une quelconque des revendications précédentes, **caractérisé en ce que** la courbe caractéristique de la force de servo-assistance F_{S} présente, après la réduction abrupte de la force de servo-assistance F_{S}, une pente plus faible et par conséquent un tracé plus plat.

5. Dispositif de changement de vitesse (11) pour une boîte de vitesses (30) d'un véhicule automobile, comprenant des moyens de sélection et de changement d'un rapport de vitesse de la boîte de vitesses (30), **caractérisé par** un système de servo-assistance (10) selon au moins l'une quelconque des revendications précédentes.
